# EUROPEAN PATENT APPLICATION

(11) **EP 2 404 753 A1**
(43) Date of publication of application: **11.01.2012**
(21) Application number: 10168596.4
(22) Date of filing: 06.07.2010
(51) Int. Cl.: B32B 15/08, B32B 27/00, B32B 27/18, A23L 3/00, B65D 51/24, B65D 81/24, C01B 3/08, C01B 3/10, B65D 81/26

(54) **Seal capable of generating molecular hydrogen and suitable for closing a container and for scavenging oxygen**

(71) Applicant: La Seda de Barcelona S.A., 08820 Barcelona (ES)
(72) Inventor: Krikor, Hilde, 2100 Deurne (BE); Dessaint, Alain, 1910 Kampenhout (BE); Verheyen, Luc, 2960 Brecht (BE)
(74) Representative: Matkowska, Franck

(57) **Abstract**

The seal (1) is adapted to be heat bonded to a container for closing an opening of the container. Said seal (1) is a laminate comprising a metallic layer (10), a liner (12) that is permeable to water vapour and to molecular hydrogen, and that can be heat bonded to a container, and at least an active layer (11), that is positioned between the metallic layer (10) and the liner (12), and that is capable of chemically reacting with water and generating molecular hydrogen.

## Description

### Technical Field

The invention relates to a novel seal that is capable of generating molecular hydrogen from a chemical reaction with water, and that can be used for closing a container and for scavenging oxygen. The container can be used for storing any oxygen-sensitive substance that can be altered by oxygen, and in particular a food substance or a beverage such as for example juice, beer, wine,...

### Prior Art

Aromatic polyester resins, and in particular polyethylene terephthalate (PET), are widely used in the packaging industry for making various types containers for storing any substance, and in particular for storing food substance or a beverage.

PET has a number of valuable properties for packaging, but lacks sufficient gas barrier properties for many applications. In particular because of its oxygen permeability, PET alone is not appropriate for packaging oxygen-sensitive food and beverage products such as beer, fruit juices, some carbonated soft drinks, etc... PET is also permeable to carbon dioxide, which in turn leads to a short shelf life for carbonated products, such as carbonated soft drinks, stored in PET containers.

For closing a container, it is common to use a removable plastic closure cap than can be for example removably screwed or snapped onto the container.

Furthermore, in the field of plastic packaging, it is also a common practise to use heat sealed containers, especially heat sealed thermoplastic containers, for storing sensitive products, like for example dairy products (UHT milk, yoghurt, cream, , ...) or tomato-based products. In this field, the rigid opened mouth of the container is hermetically closed by heat welding a sealing foil onto a top sealing surface. The heat welding operation is performed in such a way that the sealing foil hermetically closes the container and avoids, for example, any leakage of the product that is stored in the container. The heat welding operation is also performed in such a way that the sealing foil is efficiently bonded with the container, but can be however peeled off manually by the final consumer for opening the container.

There are different kinds of heat weldable sealing foils that are available and disclosed in the prior art for hermetically closing the mouth of a container. A heat weldable sealing foil generally comprises at least two laminated layers: a thermal conductive layer, and a heat weldable layer.

In most cases, the thermal conductive layer is a metal layer having a good thermal conductivity, such as for example an aluminium layer. An aluminium layer exhibits also very high gas barrier properties. The use of a seal comprising an aluminium layer advantageously prevents gas transmission in or out of the container, and thereby increases the shelf life of the product stored in the container.

The heat weldable layer is generally made of a thermoplastic film, such as for example a polyethylene film, coated onto one face of the thermal conductive layer.

The heat welding operation of the sealing foil onto the container is performed by heating the sealing foil in such a way that the heat weldable layer is melted, and by mechanically pressing the heated sealing foil against the top sealing surface of the container mouth, the melted heat weldable layer being in contact with the said top sealing surface.

The heating of the heat weldable layer of the sealing foil can be obtained by means of different heating processes. The most commonly used heating processes involve either a conductive heating of the sealing foil or an inductive heating of the sealing foil, by means notably of high frequency (HF) energy.

In order to improve the gas barrier properties of packaging articles, in particular oxygen and/or carbon dioxide barrier properties, it is now common to use multilayered packaging articles, and in particular multilayered containers, that include at least one barrier layer. For example, in the field of bottle packaging, a typical and common multilayered wall structure for a hollow rigid container is a three-layer wall: two internal and external layers made of PET, and one intermediate gas barrier layer sandwiched between the two PET layers.

A first known type of barrier layer is made of, or comprises, polymers that have excellent gas-barrier properties, in particular to O₂ and/or CO₂, and is generally referred as "passive barrier layer". Among the polymers used for making passive barrier layers, homo- or copolymers of polyamides are commonly used. Among these polyamides, the so-called "MXD6" or "MXD6 nylon" (specific polyamide material manufactured by Mitsubishi Gas Chemical Company, Japan) is preferably used, i.e. a poly(m-xylyleneadipamide) produced by the polycondensation of a diamine component composed mainly of m-xylylenediamine and a dicarboxylic acid component composed mainly of adipic acid.

A second known type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0 507 207. Said polymeric compositions generally comprise an oxidizable polymer and a transition metal catalyst. In EP-A-0 301 719, the preferred oxidizable polymers are polyamides, and especially MXD6. In EP-0 507 207, one preferred oxidizable polymer is polybutadiene. In both cases, preferred transition metal catalysts are transition metal salts, an in particular cobalt stearate. Other known metal salts used for making such composition are rhodium, manganese, copper, iron.

With multilayered packaging articles having at least one gas barrier layer comprising a polyamide (e.g. MXD6) and a polyester (e.g. PET), very good results can be achieved in terms of shelf life of the packaged products. More especially when the barrier layer comprises a polyamide (e.g. MXD6), polyester (e.g. PET), and a catalyst such as a cobalt salt, the multilayered packaging article can be used for storing oxygen-sensitive products, such as beer, fruit juice, tomato-based products, or the like. The shelf life of the packaged product widely depends of the amount of polyamide in the packaging article and of the thickness of the barrier layer.

In return, the use of gas barrier polymer, like polyamide in the container wall renders the recycling of the container more difficult. In addition, when polyamide is used, in particular for making a monolayer container, there is a risk of formation of haze in the container wall due to the orientation of the polyamide during the process for making the container. Said haze formation in the container wall is obviously detrimental for all the applications where it is important to have a transparent container, - i.e. a container whose wall has no eye-visible whitening or haze, in order to have a better appearance of the packaged product.

In order to improve the O₂ scavenging performance of a plastic container, it is also known to close the container with a closure cap comprising a layer having O₂ scavenging properties.

Another recent route for making a container having oxygen scavenging properties is described in PCT application WO 2008/090354. The O₂ scavenging properties are obtained by using an active substance, such as for example a hydride, that is capable of chemically reacting with water and generating molecular hydrogen, and by making said molecular hydrogen react with oxygen which may ingress the container. In the variant of figure 4 of PCT application WO 2008/090354, said active substance is incorporated in a plug that is positioned in a cap. In such a variant, the active substance can however prejudicially contaminate the product stored in the container.

### Objective of the invention

A general and main objective of the invention is to propose a novel active closure for a container, said closure being suitable for scavenging oxygen that may penetrate inside the container, notably through the permeable wall of the container, or oxygen that is present in the head space of the container.

A more particular objective of the invention is to propose a novel closure, that includes an active substance capable of chemically reacting with water and generating molecular hydrogen into a container, and that can be in contact with the content of the container without any risk of contamination of the said substance by the active substance.

A more particular objective of the invention is to propose a novel closure, that includes an active substance capable of chemically reacting with water and generating molecular hydrogen into a container, and that can be easily manufactured.

### Summary of the invention

These objectives are achieved by the seal of claim 1 that is adapted to be heat bonded to a container for closing an opening of the container. This seal of the invention is a laminate comprising a metallic layer, a liner that is permeable to water vapour and to molecular hydrogen, and that can be heat bonded to a container, and at least an active layer, that is positioned between the metallic layer and the liner, and that is capable of chemically reacting with water and generating molecular hydrogen.

### Brief description of the drawings

Other characteristics and advantages of the invention will appear more clearly on reading the following description of several closure seal embodiments, which description is given by way of non-limiting example and with reference to the accompanying drawings, in which:
- Figure 1 is a view in cross-section of an example of a closure seal of the invention,
- Figure 2 is a partial view in cross-section of a container mouth closed by the seal of figure 1 and by removable closure cap,
- Figure 3 to 5 are schematic view in cross-section showing other possible configurations of a container mouth closed by the seal of figure 1.

### Detailed description

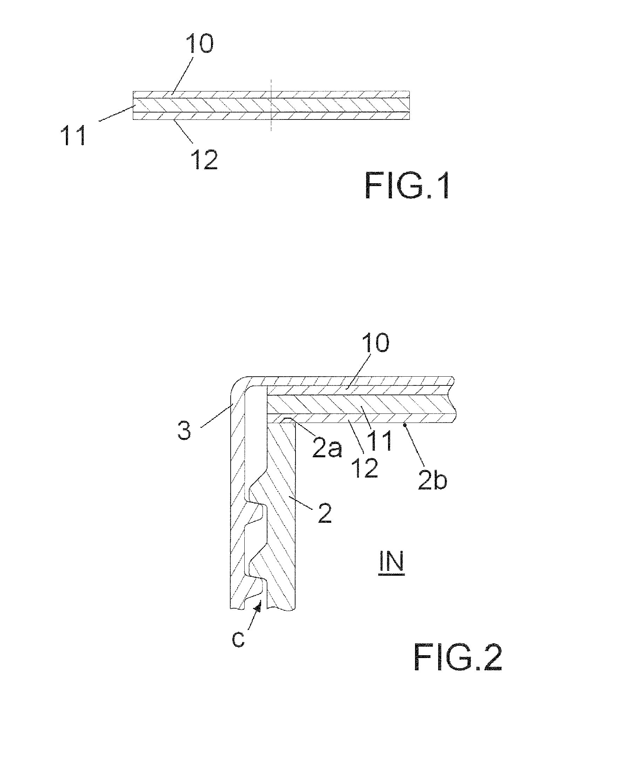

In reference to figure 1, the seal 1 is a laminate made of three layers 10, 11, 12 that are bonded together, namely an inner active layer 11 that is sandwiched between two outer layers 10 and 12.

The three layers 10, 11, 12 have the same shape and the shape of the laminate 1 is adapted to the shape of the container opening on which the seal is to be heat bonded. The shape of the laminate 1 is for example, but not necessarily, a disk.

The invention is not limited to a three-layer laminate, but encompasses also laminates having more than three layers. In the particular embodiment of figure 1, the active layer 11 is in contact with and is bonded on both faces with layers 10 and 12. This particular construction is optional and is not a limitation of the invention. The invention also encompasses laminates comprising more than three bonded layers, and wherein the active layer 11 is positioned between at least two layers 10 and 12, and is not necessarily in direct contact with these layers 10 and 12.

### Outer layer 10

The outer layer 10 is a metallic layer that can be heated by induction or by conduction. This layer is more preferably made of aluminium. More particularly, the outer layer 10 is for example a thin aluminium foil.

### Inner layer 11

The inner active layer 11 is bonded on both faces with the outer layers 10 and 12. The inner active layer is capable of chemically reacting with water and generating molecular hydrogen from this reaction with water. The material of the active layer 11 can be made of or can comprise any active substance forming such a hydrogen source. Preferably, but not only, said active substance suitable for the release of molecular hydrogen as a result of contact with water is one of the active substances described in PCT application WO2008/090354.

In one preferred embodiment, the material of the active layer 11 comprises a polymeric matrix containing the active substance which is incorporated in the polymer matrix and which is capable of chemically reacting with water and generating molecular hydrogen from this reaction with water.

Suitable polymeric matrix materials include but are not limited to low density polyethylene, in particular linear low density polyethylene, high density polyethylene, polypropylene, ethylene vinyl acetate, thermoplastic elastomers (TPEs), like styrenic block copolymers, polyolefin blends, elastomeric alloys, thermoplasticpolyurethanes, thermoplastic copolyester, and thermoplastic polyamides, or blend thereof. In particular a good candidate among thermoplastic elastomer materials is a material comprising styrenic block copolymers consisting of polystyrene blocks and rubber blocks, such as for example SEBS, SEPS, SBS, SBC.

The ratio of the weight of active substance to matrix material may be at least 0.01, preferably at least 0.02. The matrix may be a polymeric matrix and said active substance may be dispersed therein. In general, once an active material is dispersed into a polymer, the rate of release of hydrogen is limited by either the permeation rate of water into the polymeric matrix and/or by the solubility of water in the chosen matrix. Thus, selection of polymeric materials based on the permeability or solubility of water in the polymer allows one to readily control the rate of release of molecular hydrogen from any number of active substances.

The polymeric matrix may include at least 1 wt% of active substance, preferably at least 2 wt%. The polymeric matrix may include less than 20 wt% of active substance. Suitably, the polymeric matrix includes 1-16 wt%, preferably 4-12wt% of active substance. The balance of material in the polymeric matrix may predominantly comprise a said polymeric material.

Active substances suitable for the release of molecular hydrogen as a result of contact with water are preferably the ones described in PCT application WO2008/090354. In particular, said active substance may comprise a metal and/or a hydride. Said metal may be selected from sodium, lithium, potassium, magnesium, zinc or aluminum. A hydride may be inorganic, for example it may comprise a metal hydride or borohydride; or it may be organic.

More particularly, active substances include but are not limited to: sodium metal, lithium metal, potassium metal, calcium metal, sodium hydride, lithium hydride, potassium hydride, calcium hydride, magnesium hydride, sodium borohydride, and lithium borohydride.

Where the rate of reaction between the active substance and water is too slow, the addition of hydrolysis catalysts and/or agents in the polymeric matrix can be used. For example, the rate of hydrolysis of silicon hydrides may be enhanced by the use of hydroxide or fluoride ions, transition metal salts, or noble metal catalysts.

The active substance may also be the polymeric matrix. For example, polymeric silicon hydrides such as poly(methylhydro)siloxane provide both a polymeric matrix and an active substance capable of releasing molecular hydrogen when in contact with moisture.

### Outer layer 12

The outer layer 12 is a liner that can be heat bonded to a container. The liner 12 can be a monolayer or a multilayer component. The material of the liner 12 is preferably selected in order to obtain a liner 12 that:
(i) is heat bondable to container, more especially to a plastic part of a container, for closing an opening of the container and
(ii) is permeable to water vapour and to molecular hydrogen.

The material of the liner 12 can be any polymeric material that enables to obtain characteristics (i) and (ii). The materials of the liner 12 include but are not limited to low density polyethylene, in particular linear low density polyethylene, high density polyethylene, polypropylene, ethylene vinyl acetate, thermoplastic elastomers (TPEs), like styrenic block copolymers, polyolefin blends, elastomeric alloys, thermoplasticpolyurethanes, thermoplastic copolyester, and thermoplastic polyamides, polymers on methacrylateolefin base, copolymers of vinylchloride, vinylacetate and dicarbonic acid, or blend thereof. In particular a good candidate among thermoplastic elastomer materials is a material comprising styrenic block copolymers consisting of polystyrene blocks and rubber blocks, such as for example SEBS, SEPS, SBS, SBC.

### Figure 2 - heat-sealed container

Figure 2 shows a container C having a rigid plastic neck or mouth 2 terminated by an opening 2b. This top opening 2b is knowingly used for filling the container with a product and/or for pouring the product outside the container. This opening 2b is surrounded by a circumferential top sealing surface 2a. A seal 1, like the one previously described in reference to figure 1 is heat bonded to the container C in order to hermetically close the container opening 2b. More particularly, in the embodiment of figure 2, the liner 12 of the seal 1 is heat bonded to the top sealing surface 2a of the container C, on the whole periphery of the opening 2b.

In the particular embodiment of figure 2, a removable closure cap 3 is also fitted onto the container C for closing the opening 2b. In this particular embodiment, the closure cap 3 is screwed on the container neck 2. In another variant, the closure cap 3 can be snapped on the container neck 2.

For heat sealing the container C, the neck or mouth 2 of the container is preferably rigid and at least the neck or mouth 2 of the container is made of plastic material. For example, suitable plastic materials for the neck or mouth 2 of the container C may comprise polyester (including but not limited to PET), polyetheresters, polyesteramides, polyurethanes, polyimides, polyureas, polyamideimides, polyamides, polycarbonates, polyphenyleneoxide, phenoxy resins, epoxy resins, polyolefins (including but not limited to polypropylene and polyethylene), polyacrylates, polystyrene, polyvinyls (including but not limited to polyvinyl chloride)) and combinations thereof.

The material and the shape of the remaining part of the container (i.e. body of the container) are not important. In particular the container body can be for example any plastic container or any cardboard container. The container can be for example a bottle-shaped container, a flask, a jar, a tube, a bag, a pouch. Within the scope of the invention, the container body can be rigid, semi rigid or flexible. The body of containers contemplated in the present invention may be either of a monolayer or a multilayer construction. Suitable materials which may be used as a layer or part of one or more layers in either monolayer or multilayer containers include polyester (including but not limited to PET), polyetheresters, polyesteramides, polyurethanes, polyimides, polyureas, polyamideimides, polyamides, polycarbonates, polyphenyleneoxide, phenoxy resins, epoxy resins, polyolefins (including but not limited to polypropylene and polyethylene), polyacrylates, polystyrene, polyvinyls (including but not limited to polyvinyl chloride)) and combinations thereof. All of the aforementioned polymers may be in any desired combination thereof.

The container C can be manufactured by using any method known in the art, including but not limited to injection moulding, injection blow moulding (IBM), injection stretch-blow moulding (ISBM), extrusion blow moulding, thermoforming, rotational moulding, folding.

The process for heat bonding the seal 1 onto the container C is known in the art, and can be any known thermo-sealing process or induction-sealing process.

In a thermo-sealing process, the outer layer 10 is heated by conduction and the seal is mechanically pressed against the top sealing surface 2a. The heat is thus transferred to the liner 12 which melts and is heat bonded to the top sealing surface 2a of the container on the whole periphery of the opening 2b.

In an induction-sealing process, the outer layer 10 is heated by induction, for example by using HF energy, and the seal is mechanically pressed against the top sealing surface 2a. The heat is thus transferred to the liner 12 which melts and is heat bonded to the top sealing surface 2a of the container on the whole periphery of the opening 2b.

In both case (thermo-sealing and induction-sealing process), the heat welding operation is performed in such a way that the liner 12 seal is efficiently bonded with the container, but can be however peeled off manually by the final consumer for opening the container.

In reference to figure 2, once the seal 1 is bonded to the container C, the liner 12 is facing the inside IN of the container C, and forms a protective barrier that prevents the product stored in the container from contacting the active layer 11 and that prevents the active substance (H₂ generator) of the active layer 11 from migrating into the container. This layer 12 also limits the ingress of water in contact with the active layer 11, and thereby enables to obtain a controlled release of molecular hydrogen by the active layer 11 over a prolonged period of time.

### Manufacturing process of the seal

Several processes can be performed for manufacturing the seal 1.

In a first process, a three-layer laminate, constituted by three films or sheets of suitable material and corresponding respectively to the layers 10, 11, 12, is formed by thermal bonding and this laminate is then cut or punched in order to form the seal 1.

In a second process a laminate made of two layers 11 and 12 is prepared by co-extrusion ; this co-extruded two-layer laminate is then laminated with the metallic layer 10 in order to for a three-layer laminate, which is then cut or punched in order to form the seal 1.

In a third process, three pieces corresponding to each layers are obtained by cutting or punching a film or sheet of suitable material, and these pieces are stacked and assembled together by means of an adhesive and/or by curing. A suitable adhesive is for example a polyester with isocyanate, cross-linked with a polyol to get polyurethane. O₂ scavenging

In use, when the container C is containing a product, in particular an oxygen-sensitive product, and is closed by the closure seal 1, the liner 12 avoids any contact between the active layer 11 and the product stored in the container C. The water vapour contained in the head space of container penetrates through the liner 12 and enters in contact with the active layer 11.

As a result, the active substance of the active layer 11 produces molecular hydrogen that migrates through the liner 12 and penetrates in the container head space. This molecular hydrogen combines with oxygen which may have entered in the container through its permeable wall. As a result a reaction between hydrogen and oxygen takes place, and water is produced. This oxygen scavenging reaction can be catalysed by a catalyst incorporated in the closure cap 3 and/or in the container wall and/or in the container neck.

A large number of catalysts are known to catalyze the reaction of hydrogen with oxygen, including many transition metals, metal borides (such as nickel boride), metal carbides (such as titanium carbide), metal nitrides (such as titanium nitride), and transition metal salts and complexes. Group VIII metals are particularly efficacious. Of the Group VIII metals, palladium and platinum are especially preferred because of their low toxicity and extreme efficiency in catalyzing the conversion of hydrogen and oxygen to water with little or no byproduct formation. The catalyst is preferably a redox catalyst.

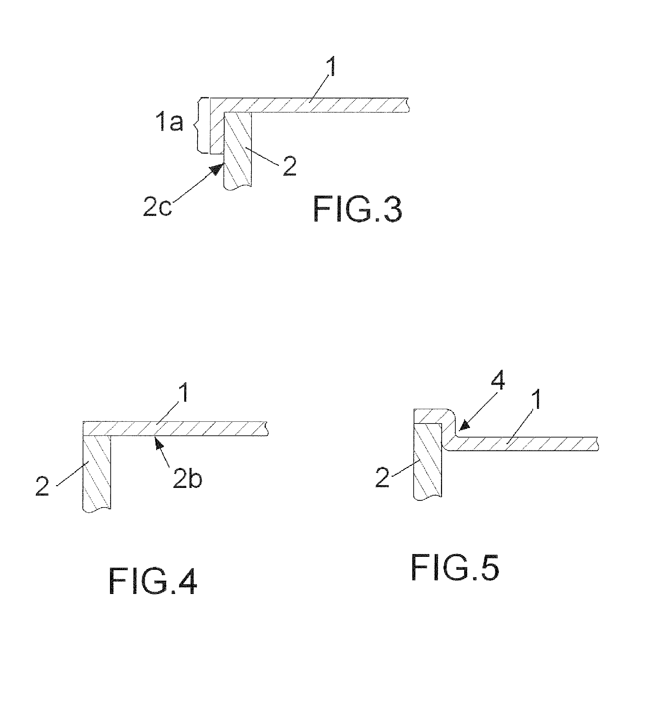

### Embodiments of figures 3 to 5

In the embodiment of figure 2, the seal 1 comprises a circumferential skirt 1 a that is also heat bonded to the outer face 2c of the neck 2 of the container C.

In the embodiment of figure 4, the container neck 2 does not comprise a screwing thread and the container opening 2b is closed only by the seal 1.

In the embodiment of figure 5, the seal 1 has been deformed by mechanical pressure in order to form a recess 4. In this embodiment a central part of the seal 1 is thus positioned inside the container neck 2.

## Claims

1. A seal (1) for closing a container, said seal (1) being a laminate comprising a metallic layer (10), a liner (12) that is permeable to water vapour and to molecular hydrogen, and that can be heat bonded to a container, and at least an active layer (11), that is positioned between the metallic layer (10) and the liner (12), and that is capable of chemically reacting with water and generating molecular hydrogen.

2. The seal of claim 1, wherein the active layer (11) comprises an active substance that is capable of chemically reacting with water and generating molecular hydrogen.

3. The seal of claim 2, wherein the active substance is selected from the group comprising Group I, II, and III metals, Group I, II, and III metal hydrides, rare earth metals, rare earth hydrides, alkali metal borohydrides, alkaline earth metal borohydrides, alkali metal aluminum hydrides, silicon hydrides, tin hydrides, and combinations thereof.

4. The seal of claim 2 or 3, wherein the active substance is selected from the group comprising sodium hydride, lithium hydride, sodium borohydride, sodium metal, lithium metal, potassium metal, calcium hydride, magnesium hydride, lithium aluminum hydride, and combinations thereof.

5. The seal of any one of claims 1 to 4, wherein the active layer (11) comprises a polymeric matrix.

6. The seal of claim 5, wherein the polymeric matrix comprises a polyethylene.

7. The seal of claim 5 or 6, wherein the polymeric matrix comprises an ethylene vinyl acetate copolymer.

8. The seal of any one of claims 5 to 7 wherein the polymeric matrix comprises a thermoplastic elastomer.

9. The seal of claim 8 wherein the thermoplastic elastomer comprises a polyolefin blend.

10. The seal of claim 8, wherein the thermoplastic elastomer comprises SEBS.

11. The seal of any one of claims 1 to 10, wherein the liner (12) comprises of a heat meltable polymeric material.

12. The seal of claim 11 wherein the liner (12) comprises a polyethylene.

13. The seal of claims 11 or 12 wherein the liner comprises a thermoplastic elastomer.

14. The seal of claim 13, wherein the thermoplastic elastomer comprises a polyolefin blend.

15. The seal of claim 13, wherein the thermoplastic elastomer comprises SEBS.

16. The seal of any one of claims 11 to 15, wherein the liner (12) comprises an ethylene vinyl acetate copolymer.

17. The seal of any one of claims 11 to 16, wherein the liner (12) comprises a methacrylateolefin-based polymer.

18. The seal of any one of claims 11 to 17, wherein the liner (12) comprises a copolymer of vinylchloride, vinylacetate and dicarbonic acid.

19. The seal of any one of claims 1 to 18, wherein the metallic layer (10) is made of aluminium.

20. An assembly comprising a container (C) and a seal (1) defined in any one of the preceding claims, wherein the container comprises an opening (2b) surrounded by a rigid plastic part (2a), and wherein the liner (12) of the seal (1) is heat bonded to the rigid plastic part (2a) of the container (C) in order to close the opening (2b).

21. The assembly of claim 20 wherein the container (C) comprises a catalyst for promoting a reaction between molecular hydrogen and molecular oxygen.

22. The assembly of claim 20 or 21, further comprising a removable closure cap (3) that can be removably fitted onto the container for closing the container opening (2b).

23. The assembly of claim 22, wherein the removable closure comprises a catalyst for promoting a reaction between molecular hydrogen and molecular oxygen.
